# EUROPÄISCHE PATENTANMELDUNG

(11) **EP 1 039 192 A2**
(43) Veröffentlichungstag der Anmeldung: **27.09.2000**
(21) Anmeldenummer: 99124446.8
(22) Anmeldetag: 08.12.1999
(51) Int. Cl.: F16K 31/40

(54) **Gas-Servoventil**

(30) Priorität: 20.03.1999 DE 19912702
(71) Anmelder: HeaTec Thermotechnik GmbH, 73066 Uhingen (DE)
(72) Erfinder: Schwarz, Hans-Jochen, Dr., 73614 Schorndorf (DE); Stengel, Peter, 73235 Weilheim/Teck (DE); Waha, Gerhard, 73249 Wernau (DE)
(74) Vertreter: Patentanwälte Rüger, Barthelt & Abel

(57) **Zusammenfassung**

Ein elektrisch gesteuertes Gas-Ventil weist einen Servoantrieb 31 auf, der über eine elektrische Kupplung 18, 45 mit dem Ventilverschlussglied 10 verbunden ist. Die elektrische Kupplungseinrichtung steuert neben der Verbindung zwischen dem Servoantrieb 31 und dem Ventilverschlussglied 10 zugleich die Druckbeaufschlagung des Servonantriebs 31, indem sie vorhandene Steuerkanäle L, 22 öffnet oder schließt.

## Beschreibung

Die Erfindung betrifft ein Gas-Servoventil mit elektrischer Ansteuerung, insbesondere für Feuerungsautomaten.

Für Gasgeräte sind Ventile erforderlich, die schnell und präzise schalten und den gestellten Anforderungen, insbesondere auch Sicherheitsanforderungen, gerecht werden. Gas-Ventile, auch wenn sie größere Gasströme schalten sollen, sollen möglichst mit geringen Schaltleistungen auskommen, um eine einfache und energiesparende elektrische Ansteuerung zu ermöglichen. Dies gilt insbesondere für Feuerungsautomaten, die ohne ständig brennende Zündflamme auskommen. Derartige Feuerungsautomaten werden meist elektrisch gezündet. Es muss sichergestellt sein, dass das den Gasstrom freigebende Gas-Ventil sauber und präzise öffnet und schliesst. Dabei sind, sollen Fehlfunktionen vermieden werden, ausreichende Ventilbetätigungskräfte zu erzeugen, für die jedoch meist keine ausreichende elektrische Energiequelle zur Verfügung steht.

Aus der EP 0 757 200 A2 ist ein Gas-Ventil bekannt, das zwei von einem gemeinsamen Elektromagneten betätigte Ventilverschlussglieder aufweist. Jedes Ventilverschlussglied ist einem Ventilsitz zugeordnet, so dass zwei in Durchströmungsrichtung hintereinander angeordnete Ventile gebildet sind. Jedes Ventilverschlussglied ist durch eine eigene Schliessfeder federnd auf seine Schliessstellung hin vorgespannt. Der Elektromagnet öffnet beide Ventile und muss dazu die erforderliche Kraft aufbringen.

Aus der EP 0 665 396 B1 ist ein durch einen Membranstellmotor betätigtes Ventil bekannt. Der Membranstellmotor weist einen Arbeitsraum auf, der über ein Magnetventil umschaltbar entweder mit Umgebungsdruck oder mit einem von einer Membranpumpe mit Druck beaufschlagbar ist.

Zur Steuerung des Ventils ist außer dem Magnetventil noch eine Membranpumpe erforderlich.

Aus der EP 0 652 501 A2 ist ein Mehrfachstellgerät mit eingangsseitigem Regler bekannt, das ein Magnetventil enthält. Zu dem Magnetventil gehören ein von einer Magnetspule betätigter Magnetanker, der auf zwei Ventilteller wirkt. Diese sind auf einer gemeinsamen Ventilspindel angeordnet und bezüglich des Gasstroms parallel geschaltet. Auf der gleichen Ventilspindel sitzt ein Steuerventil, das einen Membranstellmotor steuert. Dieser dient der Betätigung eines weiteren Ventils. Mit dem Steuerventil wird der Membranstellmotor entweder mit dem Innendruck des Mehrfachstellgeräts oder mit einem über ein weiteres druckbetätigtes Ventil mit Brennerdruck beaufschlagt.

Die den Gasfluss freigebenden und sperrenden, zueinander parallel geschalteten Ventile sind unmittelbar von dem Elektromagneten betätigt.

Es ist Aufgabe der Erfindung ein Gas-Ventil zu schaffen, das elektrisch steuerbar ist.

Diese Aufgabe wird mit dem Gas-Ventil gelöst, das die Merkmale des Patentanspruchs 1 aufweist.

Das erfindungsgemäße Gas-Ventil weist eine Servoeinrichtung zur Betätigung seines Ventilverschlussglieds auf, das somit mittelbar gesteuert ist. Eine zu der Servoeinrichtung gehörige elektrische Antriebseinrichtung weist insoweit keine kraftübertragende Verbindung im Sinne einer Abstützung an einem ortsfesten Gehäuseteil oder dergleichen auf. Die das Ventilverschlussglied bewegende Kraft wird von der Servoeinrichtung erzeugt, wenn das Ventilverschlussglied an die Servoeinrichtung angekoppelt ist. Die Servoreinrichtung erzeugt die Ventilbetätigungskraft mit einer druckbeaufschlagten Membran, die ein Gehäuseinnenvolumen in zwei Arbeitsräume unterteilt. Die Druckdifferenz zwischen den Arbeitsräumen bewegt die Membran oder erzeugt zumindest die dann von der Membran auf das Ventilverschlussglied zu übertragenden Kräfte.

Die Steuerung der Servoeinrichtung erfolgt, indem wenigstens einer der Arbeitsräume mit wechselnden Arbeitsdrücken beaufschlagt wird, während der andere Arbeitsraum vergleichsweise geringere, keine oder gegenläufige Änderungen erfährt. Dazu dient eine Steuereinrichtung, die vorzugsweise als Kupplungseinrichtung ausgebildet ist, die das Ventuilverschlussglied oder eine das Ventilverschlussglied tragende Spindel bedarfsweise mit der Membran der Servoeinrichtung verbindet bzw. von dieser trennt. Ist die Servoeinrichtung von dem Ventilverschlussglied getrennt, kann eine Bewegung der Membran, bspw. infolge von ungewünschten Druckdifferenzen nicht zum Bewegen des Ventilverschlussglieds oder gar zum Öffnen des Gas-Ventils führen. Die Kupplungseinrichtung erfüllt somit eine Sicherheitsfunktion.

Zusätzlich wirkt die Kupplungseinrichtung als Steuereinrichtung für die Servoeinrichtung. Dies kann erreicht werden, indem ein mit einem Arbeitsraum verbundener Kanal von der Kupplungseinrichtung geöffnet und geschlossen wird, wenn die Kupplungseinrichtung ein- und auskuppelt. Dieser Kanal kann bspw. derart beschaffen sein, dass er alternativ beide Arbeitsräume miteinander oder einen der Arbeitsräume mit einer stromabwärtigen Seite des Ventils verbindet. Im erstgenannten Fall sind beide Arbeitsräume zwangsläufig auf gleichem Druck, und die Membran kann keine Kraft erzeugen. Im zweitgenannten Fall entsteht an der Membran ein Druck, wenn der nicht mit dem stromabwärtigen Ende des Ventils verbundene Arbeitsraum mit einem anderen Druck beaufschlagt wird, der bspw. von dem stromaufwärtigen Ende des Ventils, d.h. von einem Eingangskanal hergeleitet ist. Die Steuereinrichtung enthält somit eine Kupplungseinrichtung, die außer dem gesteuerten mechanischen Verbinden der Membran mit dem Ventilverschlussglied auch ein Öffnen und Freigeben wenigstens eines Steuerkanals bewirkt.

Die Kupplungshälften werden vorzugsweise durch einen Elektromagneten und einen von diesem angezogenen Anker gebildet. Der Elektromagnet kann bspw. einen nach Art einer Schalenkern-Hälfte ausgebildete Armatur sein, während der Anker eine von dem Magneten angezogene Ferritplatte oder anderweitige Platte sein kann. Der Vorteil liegt in der einfachen Bauform bei Erzeugung von symmetrisch zur Längs-Mittelachse wirkenden Kräften. Außerdem ist es damit möglich, auch mit geringen Strömen eine hohe Haltekraft zu erreichen, so dass die Kupplungseinrichtung mit geringer Leistung geschlossen gehalten und das Gas-Ventil somit mit geringer elektrischer Leistung geöffnet und offengehalten werden kann.

Bei einer einfachen Ausführungsform ist einer der beiden Arbeitsräume über einen ungesteuerten Kanal mit dem Eingangskanal verbunden und somit dauernd mit Druck beaufschlagt. Über die Steuereinrichtung wird die Druckentlastung des anderen Arbeitsraums gesteuert. Dies vorzugsweise in einem Zuge mit der Betätigung der Kupplungseinrichtung. Vorzugsweise führt dazu der Steuerkanal durch die Kupplungseinrichtung, die zugleich als Steuerventil dient. Dies kann erreicht werden, indem der Luftspalt des Elektromagneten als Ventil benutzt wird. Beispielsweise ist der Luftspalt ringförmig und verschwindet, wenn der Anker an dem Elektromagneten, d.h. an dem zugehörigen Teil der Armatur der Magnetspule anliegt. Wird der Luftspalt als Kanal genutzt, der die beiden Arbeitsräume miteinander kommunizieren lässt, wird bei angezogenem Magneten und somit bei verbundener Kupplungseinrichtung der Druckausgleich zwischen beiden Arbeitsräumen gesperrt.

Zusätzlich kann von der Kupplungseinrichtung ein steuerbares Ventil mechanisch betätigt werden, über das dann die Druckentlastung eines Arbeitsraums erfolgt. Die aus dem Arbeitsraum abgelassene Gas-Menge wird dann vorzugsweise in den Auslasskanal des Gas-Ventils gegeben. Dazu dient ein Entlastungskanal, indem das mechanisch betätigte Entlastungsventil angeordnet ist.

Die Ventilbetätigungskraft kann zugleich ein Trennen des Magnetankers von dem Elektromagneten erleichtern, wenn der Haltestrom abgeschalten wird. Trennt die Kupplungseinrichtung, ist das Ventilverschlussglied wieder von der Membran getrennt und kann somit unabhängig von Bewegungen der Membran schließen.

Das Entlastungsventil ist vorzugsweise ein federnd auf seiner Schließstellung vorgespanntes Kugelventil das mit der Kupplungseinrichtung in Verbindung steht. Beispielsweise kann es in die Ventilspindel integriert sein. Es verschließt den Entlastungskanal, wenn es freigegeben ist, vollständig, so dass ein Aussickern von Gas über den Entlastungskanal bei geschlossenem Gas-Ventil nicht stattfindet.

Es wird als vorteilhaft angesehen, den Entlastungskanal durch die Ventilspindel bis zu dem stromabwärts gelegenen Ende des Ventilverschlussglieds zu führen. Hier treten bei geöffnetem Gas-Ventil relativ große Strömungsgeschwindigkeiten auf, die einen niedrigen statischen Druck ergeben. Infolge dessen, kann die Druckdifferenz zwischen den beiden Arbeitsräumen relativ groß werden, was ein sicheres und weites Öffnen des Gas-Ventils ermöglicht. Dieses wirkt somit als Schaltventil mit zwei Stellungen (auf/zu). Unerwünschte Drosselwirkungen können somit eingeschränkt oder vermieden werden.

Das Trennen der Kupplungshälften voneinander kann außer durch die Federkraft des Entlastungsventils durch eine geeignete Formgebung oder Gestaltung der Kupplungshälften unterstützt werden. Beispielsweise kann der Anker und/oder der Magnetkreis der Magnetspule mit einer Antihaftbeschichtung, bspw. Polytetrafluorethylen (PTFE) beschichtet sein. Außerdem kann der Durchmesser der Ankerplatte so bemessen sein, dass auch bei geschlossenem Magnetkreis zwar die Ankerplatte und die Armatur der Spule flächig aneinander anliegt, jedoch ein Restluftspalt verbleibt, der die Separierung der Teile erleichtert.

Das Gas-Ventil ist vorzugsweise durch eine Feder in seiner Schließrichtung vorgespannt. Bedarfsweise wird es nach Ankopplung des Ventilverschlussglieds an die Membran des Servoantriebs geöffnet, wobei der Servoantrieb gegen die Feder arbeitet. Der von der Eingangsseite her auf das Ventil wirkende hohe Druck wirkt bei geschlossenem Ventil vorzugweise so auf das Ventilverschlussglied, dass es gegen seinen Ventilsitz gedrückt wird. Ein unbeabsichtigtes Öffnen des Ventils infolge von Fehlern ist deshalb sehr unwahrscheinlich. Von in der Leitung vorhandenem Gasdruck kann es nicht aufgedrückt werden, solange keine Verbindung zwischen dem Ventilverschlussglied und der Membran besteht.

Bei einer insbesondere für niedrige Gasdrücke und mit niedrigen Druckdifferenzen auskommenden Ausführungsform ist zur Betätigung und Steuerung eines Membranantriebs eine Umschaltanordnung vorgesehen, die von einer elektrischen, fest mit der Membran verbundenen Antriebseinrichtung betätigt ist. Die Umschaltventileinrichtung enthält ein Verbindungsventil, das einen Druckausgleich zwischen beiden Arbeitsräumen gestattet, sowie ein Entlastungsventil, das die Druckentlastung eines der Arbeitsräume gestattet. Beide Ventile sind vorzugsweise an einer Wippe angeordnet, so dass sie zwangsweise gegenläufig bewegt werden. Zur Betätigung genügt ein relativ schwacher Elektromagnet. Die Ventilbetätigungskraft hat keinen Einfluss auf die Membran, so dass die Ausnutzung geringster Druckdifferenzen möglich wird.

Vorteilhafte Einzelheiten von Ausführungsformen der Erfindung sind Gegenstand von Unteransprüchen, der Zeichnung oder der Beschreibung. In der Zeichnung ist ein Ausführungsbeispiel der Erfindung veranschaulicht. Es zeigen:
- Fig. 1: ein erfindungsgemäßes Gas-Ventil, in einer schematisierten Schnittdarstellung,
- Fig.: 2 das Gas-Ventil nach Fig. 1, in einer ausschnittsweisen Explosionsdarstellung, und
- Fig. 3: eine abgewandelte Ausführungsform des erfindungsgemäßen Gas-Ventils, in einer schematischen Schnittdarstellung.

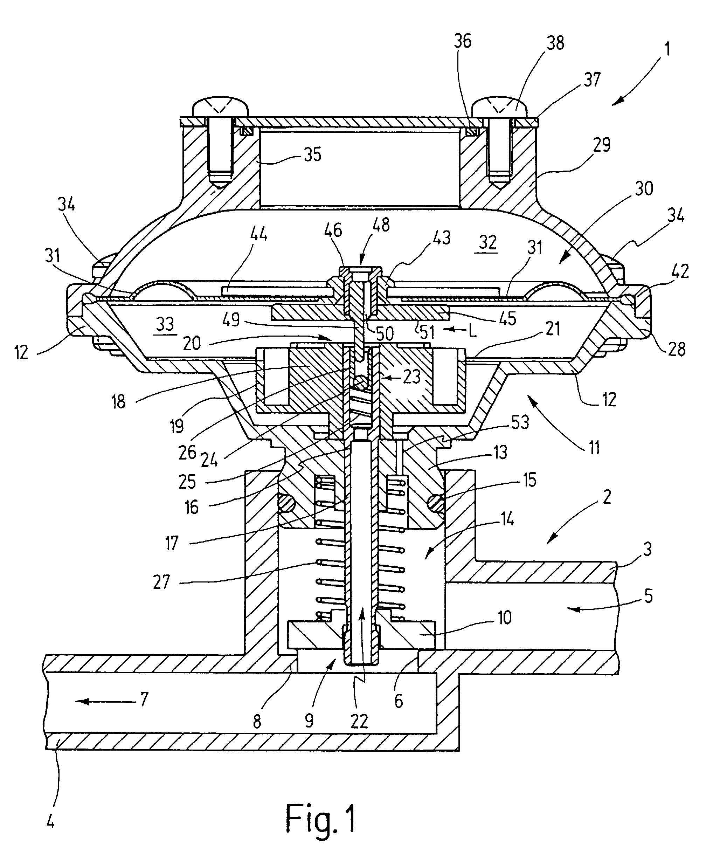

In Fig. 1 ist ein elektrisch steuerbares Gas-Ventil 1 für einen Feuerungsautomaten oder für ähnliche Einrichtungen veranschaulicht. Das Gas-Ventil 1 weist ein Ventilgehäuse 2 auf, das einen Eingangsanschluss 3 und einen Ausgangsanschluss 4 aufweist. Von dem Eingangsanschluss 3 führt ein Eingangskanal 5 an einem Ventilsitz 6 vorbei zu einem Ausgangskanal 7. Der Ventilsitz 6 ist durch den Rand einer im Wesentlichen kreisförmigen in einer Zwischenwand 8 vorgesehenen Öffnung 9 gebildet. Diese ist bedarfsweise durch einen Ventilteller 10 zu verschließen, der ein Ventilverschlussglied bildet. Der Ventilteller 10 ist von einer Betätigungseinrichtung 11 gehalten und wird von dieser bewegt, d.h. bedarfsweise gegen den Ventilsitz 6 gedrückt bzw. von diesem weg verstellt.

Zu der Betätigungseinrichtung 11 gehört ein Gehäuse 12, das mit einem entsprechenden Ansatz 13 in einer in dem Ventilgehäuse 2 vorgesehenen Öffnung 14 sitzt. Diese ist koaxial zu der Öffnung 9 ausgebildet. Zur Abdichtung weist der Ansatz 13 eine Ringnut auf, in der ein O-Ring 15 so gehalten ist, dass er den Ansatz 13 gegen die Wandung der Öffnung 14 abdichtet. Mechanische Verbindungsmittel zur Halterung der Betätigungseinrichtung 11 an dem Ventilgehäuse 2 sind vorhanden, in Fig. 1 jedoch nicht weiter veranschaulicht.

Das Gehäuse 2 weist in seinem Ansatz 13 koaxial zu dessen etwa zylindrischen äußeren Mantelfläche und somit koaxial zu der Öffnung 14 eine Bohrung 16 auf, in der eine Ventilspindel 17 axial verstellbar sitzt. Die Ventilspindel 17 ist dabei relativ leichtgängig bewegbar. Auf Gasdichtigkeit zwischen der Wandung der Bohrung 16 und der Außenfläche der Ventilspindel 17 kommt es nicht an. Bedarfswesie könne hier auch Gasübertrittskanäle z.B. in Form von Längsnuten ausgebildet sein.

Die Ventilspindel 17 trägt an ihrem in Fig. 1 unteren, d.h. in das Ventilgehäuse 2 ragenden Ende den Ventilteller 10. An ihrem von dem Ventilteller 10 abliegenden Ende trägt die Ventilspindel 17 einen Elektromagneten 18, dessen Wicklungsanschlüsse über flexible Zuleitungen nach außen geführt sind. Der Elektromagnet 18 enthält eine Spule, die koaxial zu der Ventilspindel 17 angeordnet ist. Die Spule ist von einem fest mit der Ventilspindel 17 verbundenen Magnetkreis 19 aufgenommen, der an seinem stirnseitigem Ende eine geschliffene Planfläche 20 aufweist. Der topfartig ausgebildete Magnetkreis 19 weist außer einem ringförmigen Aufnahmeraum für die Spule an seiner Außenseite einen zylindrischen Außenmantel 21 auf, an dessen stirnseitigen Ende wie auch aus der geschliffenen Planfläche 20 das Magnetfeld austritt.

Die Ventilspindel 17 ist hohl, d.h. als Rohr ausgebildet und definiert somit einen Entlastungskanal 22. Dieser ist durch ein Entlastungsventil 23 verschlossen. Zu dem Entlastungsventil 23 gehört eine Ventilkugel 24, die mittels einer Druckfeder 25 gegen eine Presshülse 26 gedrückt ist, die in dem freien Ende der Ventilspindel 17 sitzt. Die Druckfeder 25 drückt sich mit einem Ende an der Ventilkugel 24 und ihrem anderen Ende an einer den Entlastungskanal 22 ringförmig nach innen verengenden Sicke ab. Die Presshülse 26 bildet den Ventilsitz für die Ventilkugel 24.

Das Ventilverschlussglied 10 ist gemeinsam mit der Ventilspindel 17 und dem Elektromagneten 18 in Axialrichtung bewegbar. Um die Einheit und insbesondere den Ventilteller 10 gegen den Ventilsitz 6 vorzuspannen, ist zwischen dem Ansatz 13 und dem Ventilteller 10 eine Druckfeder 27 angeordnet.

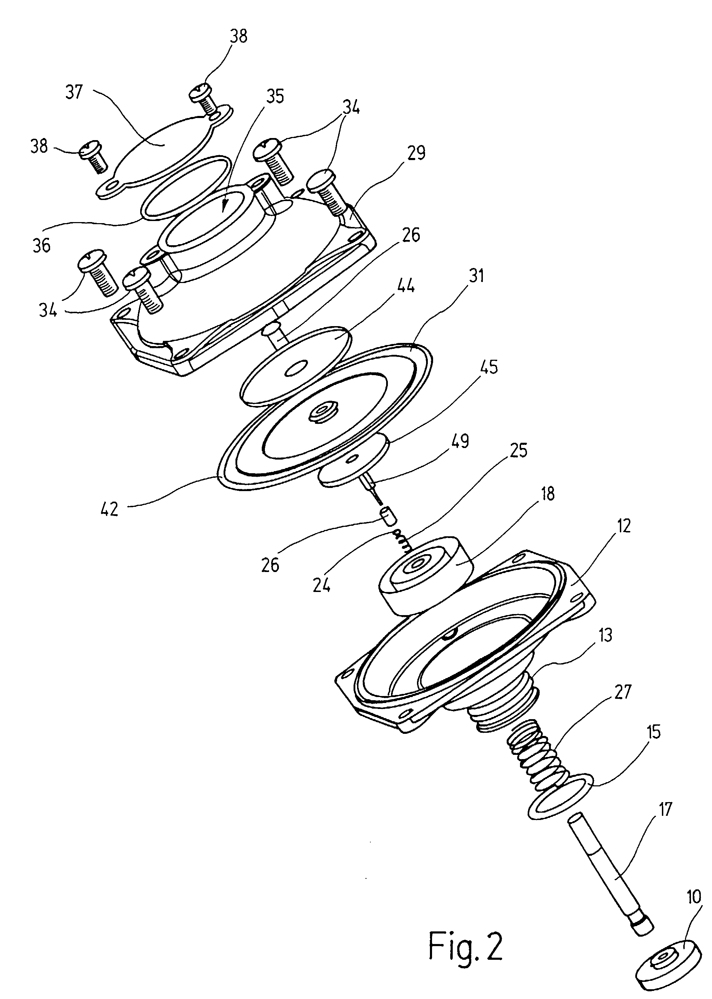

Das Gehäuse 12 ist schalenartig ausgebildet und weist einen ringförmigen Rand 28 auf, auf den ein Gehäusedeckel 29 aufgesetzt ist. Das Gehäuse 12 und der Gehäusedeckel 29 legen einen Innenraum 30 fest, der durch eine flexible Membran 31 in zwei Arbeitsräume 32, 33 unterteilt ist. Der Gehäusedeckel 29 ist durch Schrauben 34 (Fig. 2) mit dem Gehäuse 12 verbunden. Eine an seiner Oberseite vorhandene Öffnung 35 kann über eine Dichtung 36, einen Deckel 37 und geeignete Befestigungsschrauben 38 verschlossen werden.

Die Membran 31 weist zur Abdichtung des Gehäusedeckels 29 gegen das Gehäuse 12 eine Ringwulst 41 auf, die in einer entsprechenden von beiden Gehäuseteilen begrenzten Ausnehmung 42 liegt und gehalten ist. Die Ringwulst 42 und die flexible Membrandichten dichten die Fuge zwischen dem Gehäusedeckel 29 und dem Gehäuse nach außen ab, womit auch beide Arbeitsräume 32, 33 gegeneinander abgedichtet sind.

Die Membran 31 weist in ihrer Mitte eine Öffnung auf, die von einem gedrungenen rohrförmigen Ansatz 43 umgeben ist. Auf diesen ist ein scheibenförmiges Stabilisierungsblech 44 aufgeschoben, das die Membran 31 in ihrem mittleren Bereich flächig abstützt. Auf der Gegenseite ist eine als Anker für den Elektromagneten 18 dienende Ferritscheibe 45 angeordnet, die durch eine Befestigungsbuchse 46 gehalten ist. Die Befestigungsbuchse 46 ist durch die Öffnung gesteckt, die von dem Ansatz 43 begrenzt wird. Sie ist in die Ferritscheibe 45 eingeklebt oder gepresst. Die Membran 31 ist somit zwischen dem Stabilisierungsblech 44 und der Ferritscheibe 45 gehalten.

Die Befestigungsbuchse 46 ist mit einem Durchgangskanal 48 versehen, der koaxial zu dem Entlastungskanal 22, der Ventilspindel 17 angeordnet ist. In dem Durchgangskanal 48 sitzt ein Ventilstift 49, der eine Außennut 50 aufweist, um den Durchgangskanal 48 nicht zu versperren. Ein fingerartiger Fortsatz des Ventilstifts 49 erstreckt sich bis in den Entlastungskanal 22 hinein, ohne diesen jedoch zu verschliessen. Der Außendurchmesser des Ventilstifts 49 ist in diesem Bereich deutlich geringer als der Durchmesser, der in der Presshülse vorgesehenen Öffnung.

Die Ferritscheibe 45, die über die Befestigungshülse 46 an der Membran 31 gehalten ist, weist an ihrer dem Elektromagneten 18 zugewandten Seite eine geschliffene Fläche 51 auf, die bis in die Nähe des äußeren Rands des Mantels 21 reicht. Zwischen der geschliffenen Fläche 20 und der geschliffenen Fläche 51 ist ein Luftspalt L ausgebildet, in dem bei Bestromung der Spule ein magnetisches Feld vorhanden ist. Dieser Luftspalt L ist, wenn die Flächen 20, 51 aneinander liegen Null, d.h. er verschwindet. Ein zweiter Luftspalt, der mit dem ersten Luftspalt in Reihe liegt, wird zwischen dem äußeren Rand der Ferritscheibe 45 und dem Mantel 21 des Elektromagneten 18 gebildet. Dieser Luftspalt wird vorzugsweise nicht ganz Null, um ein Klebenbleiben der Ferritscheibe 45 an dem Elektromagneten 18 zu verhindern, wenn der Strom abgeschaltet wird. Außerdem können die geschliffenen Flächen 20, 51 ganz oder teilweise mit Antihaftmitteln bspw. PTFE beschichtet sein.

Zur Druckbeaufschlagung des Arbeitsraums 33 ist in dem Gehäuseteil 12, vorzugsweise in dem Ansatz 13, ein Kanal 53 ausgebildet, der den Eingangskanal 5 des Ventilgehäuses 2 mit dem Arbeitsraum 33 verbindet.

Das insoweit beschriebene Gas-Ventil 1 arbeitet wie folgt:

Es wird zunächst davon ausgegangen, dass der Elektromagnet 18 keinen Strom erhält. Das Gas-Ventil 1 befindet sich in der in Fig. 1 veranschaulichten Position. Die aus der Ferritscheibe 45 und dem Elektromagneten 18 gebildete Kupplungseinrichtung ist getrennt. Der Ventilteller 10 ist nicht mit der Membrane 31 verbunden.

Durch die Wirkung der Druckfeder 27 ist der Ventilteller 10 gegen den Ventilsitz 6 gedrückt. Liegt über den Eingangskanal 5 zusätzlich Gasdruck an dem somit geschlossenen Ventil an, belastet dieser Gasdruck den Ventilteller 10 gegen den Ventilsitz 6. Der Gasdruck dringt außerdem über den Kanal 53 zu dem Arbeitsraum 33 und über den Durchgangskanal 48 (d.h. die Nut 50) in den Arbeitsraum 32 vor. Auf beiden Seiten der Membran 31 herrscht somit gleicher Druck, so dass die Membran 31 nicht ausgelenkt ist. Druckschwankungen in dem Gasnetz können, sofern sie überhaupt zu Bewegungen der Membran 31 führen, keine Axialverschiebung der Ventilspindel 17 bewirken, weil die Membran 31 von der Ventilspindel 17 getrennt ist. Zusätzlich belastet der auf dem Ventilteller 10 lastende Gasdruck das Ventil in Schliessrichtung.

Der in dem Arbeitsraum 33 vorhandene Gasdruck kann über den Entlastungskanal 22 nicht abströmen. Das Entlastungsventil 23 ist unter der Wirkung der Druckfeder 25 sicher geschlossen. Das Gas-Ventil 1 ist somit vollkommen gesperrt.

Soll das Gas-Ventil 1 nun geöffnet werden, wird nun der Elektromagnet 18 bestromt. Dadurch zieht der Elektromagnet 18 die Ferritscheibe 45 und somit die Membran 31 zu sich heran, bis die Ferritscheibe 45 mit ihrer geschliffenen Fläche 51 auf der ringförmigen den Entlastungskanal 22 umgebenden Fläche 20 aufsetzt. Somit wird der der Luftspalt L geschlossen und der Durchgangskanal 18 von dem Arbeitsraum 33 getrennt. Die Arbeitsräume 32, 33 kommunizieren dadurch nicht mehr miteinander und können unterschiedliche Drücke annehmen.

Zugleich öffnet der Ventilstift 49 das Entlastungsventil 23, indem er die Kugel 24 von ihrem Ventilsitz weg drückt. Der Durchgangskanal 48 wird dadurch mit dem Entlastungskanal 22 verbunden. Der Arbeitsraum 32 kann somit über den Durchgangskanal 48 und den Entlastungskanal den Druck des Ausgangskanals 7 annehmen. Dieser ist geringer als der Druck in dem Eingangskanal 5. Der Arbeitsraum 33 hingegen steht über den Kanal 53 nach wie vor mit dem Druck des Eingangskanals 5 in Verbindung. Dadurch wird der Druck in dem Arbeitsraum 33 höher als der Druck in dem Arbeitsraum 32, wodurch die Membran nun unter Mitnahme der Ventilspindel 17 nach oben, d.h. von dem Ventilsitz 6 weg bewegt wird. Das Ventil wird somit gegen die Kraft der Druckfeder 27 geöffnet.

Das durch das geöffnete Ventil strömende Gas strömt an der Mündung des Entlastungskanals 22 vorbei und vermindert dort den statischen Druck. Dies reduziert den Druck in dem Arbeitsraum 32 weiter, so dass das Gas-Ventil 1 ganz öffnet oder offen bleibt. Es ist dazu erforderlich, den Elektromagneten 18 wenigstens soweit zu bestromen, dass er die Ferritplatte 45 hält. Der Haltestrom kann gegenüber dem zum Anziehen erforderlichen Strom reduziert sein, wodurch Leistungseinsparungen bewirkt werden. Soll das Gas-Ventil 1 schliessen, wird der Spulenstrom soweit abgesenkt oder ganz abgeschaltet, dass der Elektromagnet 18 die Ferritplatte 45 nicht mehr halten kann. Damit trennt sich der Elektromagnet 18 von der Ferritplatte 45 und der Membran 31. Die Ventilspindel 17 ist nun frei beweglich und wird unter der Wirkung der Druckfeder 27 in Richtung auf den Ventilsitz 6 hin bewegt bis das Ventil schließt.

Zugleich hebt der Ventilstift 49 von der Kugel 24 ab, die somit den Entlastungskanal 22 schließt. Der nun wieder offene Luftspalt zwischen der Ferritplatte 45 und dem Elektromagneten 8 lässt den in dem Arbeitsraum 33 vorhandenen Druck durch den Durchgangskanal 48 in den Arbeitsraum 32 überströmen, so dass ein Druckausgleich hergestellt wird. Die Membran 31 wird dadurch wieder kraftlos.

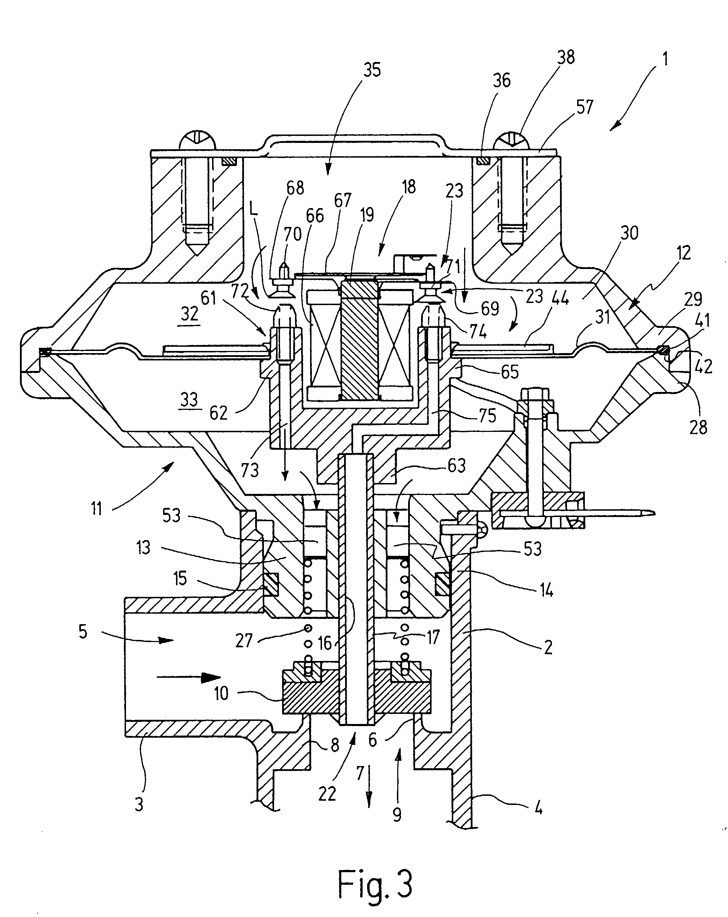

Eine abgewandelte und insbesondere für niedrige Differenzdrücke an dem Gas-Ventil 1 eingerichtete Ausführungsform der Erfindung ist in Figur 3 veranschaulicht. Soweit bau- oder funktionsgleiche Teile zu dem vorbeschriebenen Gas-Ventil 1 vorhanden sind, werden ohne erneute Erläuterung ohne Bezugnahme gleiche Bezugszeichen verwendet. Die Bau- und Funktionsbeschreibung gilt entsprechend. Im nachfolgenden werden die feinen Unterschiede beleuchtet:

Die Membran 31 weist zentrisch eine relativ große randlose Durchgangsöffnung 61 auf, in der ein Ventilkörper 62 sitzt. Dieser weist eine etwa zylindrische Außenkontur und an seiner von der Membran 31 abliegenden Seite einen etwa rohrförmigen Fortsatz 63 auf, von dem die Ventilspindel 17 aufgenommen ist. Die Ventilspindel 17 und der Ventilkörper 62 sind starr miteinander verbunden. Der Ventilkörper 62 ragt durch die Durchgangsöffnung 61 und ist mit dem Stabilisierungsblech 64 verschraubt oder verklebt. Die Membran 31 ist zwischen dem Stabilisierungsblech 44 und einem ringförmigen, den Ventilkörper 62 umgebenden Flansch 65 festgehalten.

Der Ventilkörper 62 weist einen Innenraum auf, in dem eine Magnetspule 66 untergebracht ist. Diese ist auf einen Kern gewickelt und mit dem Ventilkörper 62 verbunden. Das von der Magnetspule 66 ausgehende Magnetfeld dient zur gezielten Bewegung einer Schaltwippe 67, deren Drehachse quer zur Wicklungsachse der Magnetspule 66 und etwa diese schneidend angeordnet ist. Die Schaltwippe trägt an ihren beiden voneinander weg weisenden Enden 68, 69 jeweils ein Ventilverschlussglied 70, 71. Das Ventilverschlussglied 70 bildet mit einer gegenüberliegenden, mit dem Ventilkörper 61 verbundenen Düse 72 ein Druckausgleichsventil für einen Kanal 73, der durch den Ventilkörper 62 aus dem Arbeitsraum 32 in den Arbeitsraum 33 führt. Das Ventilverschlussglied 71 hingegen bildet mit einer an dem Ventilkörper 62 gehaltenen Düse 74 ein Entlastungsventil zur Steuerung eines von dem Entlastungsventil aus dem Arbeitsraum 32 in den Entlastungskanal 22 führenden Kanal 75. Die Schaltwippe 67 ist mittels einer Feder auf eine Kippstellung hin vorgespannt, in der das so gebildete Entlastungsventil 23 geschlossen ist. Das auf der anderen Seite der Schaltwippe 67 ausgebildete Druckausgleichsventil L ist hingegen in diesem Zustand, d.h. bei nichtbestromter Magnetspule 66 offen.

Das insoweit beschriebene Gas-Ventil 1 arbeitet wie folgt:

Ist die Magnetspule 66 stromlos, befindet sich die Schaltwippe 67 in der dargestellten Stellung. Das Entlastungsventil 23 ist geschlossen, während das Druckausgleichsventil L offen ist. Beide Arbeitsräume 32, 33 haben somit den gleichen Druck, der wegen der Verbindung durch den Kanal 53 zu dem Eingangskanal 5 mit dem Druck der Gasleitung übereinstimmt. Die Druckfeder 27 hält das Gasventil 1 somit geschlossen.

Wird nun die Magnetspule 66 angesteuert, schaltet die Schaltwippe 67 in ihre andere Kipplage, in der das Entlastungsventil 23 offen und das Druckausgleichsventil L geschlossen ist. Nunmehr erhält der Arbeitsraum 33 über den Kanal 53 den vor dem Ventilverschlussglied 10 anstehenden Druck, während der Arbeitsraum 32 den niedrigeren, an dem Ausgang des Gas-Ventils 1, herrschenden Druck erhält. Die Membran 31 wird deshalb infolge der Druckdifferenz in Figur 3 in die Kraft der Druckfeder 27 nach oben bewegt, so dass das Ventilverschlussglied 10 von dem Ventilsitz 6 abhebt. Das Gas-Ventil 1 öffnet somit. Zur Aufrechterhaltung dieser Ventilstellung ist nur eine äußerst geringe Druckdifferenz erforderlich. In den meisten Fällen erreicht die an dem Entlastungskanal 22 vorbeifließende Strömung aus, einen niedrigeren Druck zu erzeugen, der durch den Entlastungskanal 22 und den Entlastungskanal 75 auf den Arbeitsraum 32 wirkt und das Ventil offen hält. Damit kann ein Gas-Ventil 1 geschaffen werden, das trotz Servobetätigung mit einem extrem niedrigen Druckabfall von bspw. lediglich wenigen Millibar auskommt.

Ein elektrisch gesteuertes Gas-Ventil weist einen Servoantrieb 31 auf, der über eine elektrische Kupplung 18, 45 mit dem Ventilverschlussglied 10 verbunden ist. Die elektrische Kupplungseinrichtung steuert neben der Verbindung zwischen dem Servoantrieb 31 und dem Ventilverschlussglied 10 zugleich die Druckbeaufschlagung des Servonantriebs 31, indem sie vorhandene Steuerkanäle L, 22 öffnet oder schließt.

## Patentansprüche

1. Gas-Ventil (1) mit elektrischer Ansteuerung, insbesondere für Feuerungsautomaten,
mit einem Ventilgehäuse (2), an dem ein Eingangskanal (5), ein Ventilsitz (6) und ein Ausgangskanal (7) ausgebildet sind,
mit einem Ventilverschlussglied (10), das auf den Ventilsitz (6) zu und von diesem weg verstellbar gelagert ist,
mit einer Servoeinrichtung (11), die eine ein Gehäuseinnenvolumen (30) in zwei Arbeitsräume (32, 33) unterteilende Membrane (31) aufweist, und
mit einer elektrisch betätigbaren Steuereinrichtung (18, 45), über die wenigstens einer der Arbeitsräume (32) alternativ mit dem Eingangskanal (5) oder mit dem Ausgangskanal (7) verbindbar ist.

2. Gas-Ventil nach Anspruch 1, dadurch gekennzeichnet, dass die Steuereinrichtung (18, 45) eine Kupplungseinrichtung beinhaltet, mit der das Ventilverschlussglied (10) zeitweilig mit der Membrane (31) verbindbar ist.

3. Gas-Ventil nach Anspruch 2, dadurch gekennzeichnet, dass die Kupplungseinrichtung zwei Kupplungshälften (18, 45) aufweist, die miteinander in und außer Eingriff bringbar sind, und von denen eine mit der Membrane (31) und die andere mit dem Ventilverschlussglied (10) verbunden ist.

4. Gas-Ventil nach Anspruch 3, dadurch gekennzeichnet, dass eine der Kupplungshälften (18) durch einen Elektromagneten und die andere Kupplungshälfte (45) durch einen Anker gebildet sind.

5. Gas-Ventil nach Anspruch 4, dadurch gekennzeichnet, dass der Elektromagnet (18) ein in oder gegen die Bewegungsrichtung des Ventilverschlussglieds (10) gerichtetes Feld erzeugt und eine Stirnfläche (20) zur flächenhaften Anlage des vorzugsweise scheibenförmigen Ankers (45) aufweist.

6. Gas-Ventil nach Anspruch 1, dadurch gekennzeichnet, dass einer (33) der beiden Arbeitsräume (32, 33) über einen ungesteuerten Kanal (53) mit dem Eingangskanal (5) verbunden ist.

7. Gas-Ventil nach Anspruch 1, dadurch gekennzeichnet, dass der von der Steuereinrichtung (18, 45) gesteuerte Arbeitsraum (32) über einen Steuerkanal (22, 48) zugänglich ist, der von einer zu der Steuereinrichtung (18, 45) gehörigen Steuerventileinrichtung (L, 23) gesteuert ist.

8. Gas-Ventil nach Anspruch 7, dadurch gekennzeichnet, dass die Steuerventileinrichtung (L, 23) ein Umschaltventil ist.

9. Gas-Ventil nach Anspruch 3 und 7, dadurch gekennzeichnet, dass der Steuerkanal (22, 48) durch die Kupplungseinrichtung (18, 45) führt.

10. Gas-Ventil nach Anspruch 9, dadurch gekennzeichnet, dass der Steuerkanal (22, 48) einen durch die erste, mit der Membrane (31) verbundene Kupplungshälfte (45) führenden Abschnitt (48) aufweist, dass die beiden Kupplungshälften (18, 45) jeweils eine geschlossene, den Steuerkanal (22, 48) umgebende Dichtungsfläche (20) aufweisen, die beim Kuppeln miteinander in gasdichte Anlage überführt werden und ansonsten eine Verbindung zu dem anderen Arbeitsraum (33) freigeben, und dass der Steuerkanal (22, 48) einen Entlastungsabschnitt (22) aufweist, der zu dem Ausgangskanal (7) führt.

11. Gas-Ventil nach Anspruch 10, dadurch gekennzeichnet, dass in dem Entlastungsabschnitt (22) ein gesteuertes Entlastungsventil (23) vorgesehen ist.

12. Gas-Ventil nach Anspruch 11, dadurch gekennzeichnet, dass das Entlastungsventil (23) von einer Relativbewegung der Membrane (31) zu dem Ventilverschlussglied (10) gesteuert ist.

13. Gas-Ventil nach Anspruch 12, dadurch gekennzeichnet, dass das Entlastungsventil (23) ein durch eine Feder (25) auf seine Schließstellung hin vorbelastetes, vorzugsweise als Kugelventil ausgebildetes Ventil ist, dem ein mit der Membrane (31) verbundener Stößel (49) zugeordnet ist, um das Entlastungsventil (23) zu öffnen, sobald die Dichtungsflächen (20, 51) der Kupplungshälften (10, 45) in Anlage befindlich sind.

14. Gas-Ventil nach Anspruch 10, dadurch gekennzeichnet, dass der Entlastungskanal (22) durch eine Ventilspindel (17) führt, die an einem Ende mit der Steuereinrichtung (18, 45) verbunden ist und die an ihrem anderen Ende das Ventilverschlussglied (10) trägt.

15. Gas-Ventil nach Anspruch 3, dadurch gekennzeichnet, dass wenigstens eine der Kupplungshälften (18, 45) an ihrer Berührungsfläche mit einer Antihaftbeschichtung versehen ist.

16. Gas-Ventil nach Anspruch 1, dadurch gekennzeichnet, dass das Ventilverschlussglied (10) durch ein Federmittel (27) auf seine Schließposition hin vorgespannt ist.

17. Gas-Ventil nach Anspruch 8, dadurch gekennzeichnet, dass die Steuereinrichtung (18, 45) fest mit der Servoreinrichtung (11) verbunden ist und dass das Umschaltventil wenigstens zwei Einzelventile aufweist, die gegenläufig gesteuert sind und von denen eines als Entlastungsventil (23) und das andere als Verbindungsventil dient.

18. Gas-Ventil nach Anspruch 17, dadurch gekennzeichnet, dass das Entlastungsventil (23) und das Verbindungsventil an den Enden einer Wippe angeordnet sind, die von einem Steuermagneten betätigbar ist.
